# EUROPÄISCHE PATENTSCHRIFT

(11) **EP 3 700 843 B1**
(45) Veröffentlichungstag und Bekanntmachung des Hinweises auf die Patenterteilung: **22.12.2021**
(21) Anmeldenummer: 18793652.1
(22) Anmeldetag: 26.10.2018
(51) Int. Cl.: B65G 17/38, B65G 43/02, F16G 13/00, G01N 3/56

(54) **ANTRIEBSKETTE MIT VERSCHLEISSSENSOR**
DRIVE CHAIN WITH WEAR SENSOR
CHAÎNE DE TRANSMISSION DOTÉE D'UN CAPTEUR D'USURE

(30) Priorität: 27.10.2017 DE 102017125199
(43) Veröffentlichungstag der Anmeldung: 02.09.2020
(73) Patentinhaber: DALOG Diagnosesysteme GmbH, 86356 Neusäß (DE)
(72) Erfinder: MUSCHAWECK, Franz, 86356 Neusäß (DE)
(74) Vertreter: Grünecker Patent- und Rechtsanwälte PartG mbB
(86) Internationale Anmeldenummer: PCT/EP2018/079392
(87) Internationale Veröffentlichungsnummer: WO 2019/081698

(56) Entgegenhaltungen:
- EP-A1- 3 070 029
- WO-A1-2009/044117
- DE-A1- 3 502 053
- GB-A- 2 128 712
- GB-A- 2 264 168
- JP-A- S63 302 333
- KR-A- 20080 099 663
- US-A1- 2011 308 227

## Beschreibung

Die vorliegende Erfindung bezieht sich auf eine Antriebskette, insbesondere eine Förderkette für Industrieanlagen, mit einer Vielzahl von Kettengliedern, die jeweils über ein Kettengelenk miteinander verbunden sind, wobei sich zur Ausbildung des Kettengelenks ein Kettenbolzen in Richtung einer Gelenkachse des Kettengelenks durch eine Gelenköffnung erstreckt, und mit einem Sensor zur Erfassung des Kettenverschleißes. Des Weiteren bezieht sich die Erfindung auf einen Kettenbolzen für eine solche Antriebskette sowie ein Verfahren zur Erfassung des Kettenverschleißes einer solchen Antriebskette.

In vielen Bereichen des Maschinen- und Anlagenbaus, aber auch in der Schwerindustrie, im Bergbau, im Tagebau, der Zementindustrie, der Personenbeförderungsindustrie oder der Chemieindustrie stellen Antriebsketten und zugehörige Kettentriebe eine wichtige Komponente dar, die in einer Vielzahl von Anwendungsmöglichkeiten eingesetzt werden. Aufgrund der extremen Einsatzbedingungen, den teilweise sehr hohen Transportgewichten und weiteren Umgebungseinflüssen, denen solche Förderketten in Industrieanlagen, beispielsweise in der Glasindustrie, Zementindustrie, Stahlindustrie, Industrieofenbau, Mühlenbau, Schüttgutindustrie, Bergwerken oder aber in der Personenbeförderung, ausgesetzt sind, werden an industriell genutzte Antriebsketten hohe Anforderungen gestellt. In den komplexen Anforderungsprofilen, die sich aus den unterschiedlichen Bedingungen der jeweiligen Industrieanlage ergeben, beispielsweise hohe Fördergutströme, Temperaturen bis zu 700 °C, Kettenradabstände von bis zu 250 m, komplexe Führungen der Kettentriebe, Überwindung großer Förderhöhen und Förderleistungen, werden von den Herstellern nicht nur innovative Förderkonzepte entwickelt, sondern auch die eingesetzten Antriebsketten stetig optimiert.

Im Betrieb von üblichen Antriebsketten, insbesondere von Förderketten in Industrieanlagen, führt die relative Bewegung zwischen den Kettenbolzen und der Gelenköffnung der Gelenkhülse, beim Eingriff der Antriebsketten in die zugehörigen Kettenräder, zu einem Verschleiß an den gehärteten Oberflächen der Kettenbolzen und der Gelenkhülsen sowie weiteren an der relativen Bewegung beteiligten Komponenten. Diese Reibung führt über einen längeren Zeitraum dazu, dass sowohl die Oberfläche der Gelenkhülsen, als auch der Kettenbolzen, verschleißen und eine gehärtete Oberflächenschicht abgetragen wird. Danach kommt es in Folge eines beschleunigten Durchreibens der Kettenbolzen, teilweise beschleunigt durch Korrosionsmulden als Ansatzpunkte für einen Dauerbruch, zum Ausfall der Förderkette. In der Vergangenheit hat man sich insbesondere auf eine Verbesserung der Kettenwerkstoffe und der Wärmebehandlung konzentriert, wobei zusätzlich auch die gestiegene Genauigkeit in der Fertigung zu einer Verlängerung der Lebensdauer geführt hat.

Eine Bewertung des Alterungsfortschritts von Antriebsketten in Folge von Verschleiß, Ermüdung und Korrosion ist gerade im Einsatz in Industrieanlagen nur bedingt möglich. Das Konzept ein Stück einer solchen Antriebskette aus dem Kettentrieb herauszunehmen und zwischenzeitlich mit neuen Kettengliedern zu ersetzen, um den tatsächlichen Alterungsfortschritt der Antriebskette zu untersuchen, ist nur in wenigen Anwendungsfällen möglich. Darüber hinaus kann man an solchen Kettenproben, sofern diese auch repräsentativ für die Antriebskette sind, die verbleibende Restlebensdauer der Antriebskette in Zeitschwingversuchen lediglich abschätzen. Der Aufwand der Untersuchung solcher Kettenproben und die Genauigkeit der Abschätzung der verbleibenden Lebensdauer stehen dabei in einem finanziell kaum vertretbaren Verhältnis zueinander. Um Kettenbrüche und damit teure Betriebsausfälle der zugehörigen Industrieanlagen zu vermeiden, werden in der betrieblichen Praxis die überwiegende Anzahl der Förderketten anhand von Erfahrungswerten für die Kettenlänge vorzeitig ausgetauscht, ohne eine Kenntnis des tatsächlichen Alterungszustands und einer möglichen problemlosen Restlebensdauer. Im Falle des "Nicht-Austauschens" der Kette steigt das Ausfallrisiko exponentiell.

Die Problematik des mit fortschreitender Betriebsdauer zunehmenden Verschleißes der Kettengelenke von Antriebs- und Förderketten ist in der Technik bekannt und wird in den verschiedenen Einsatzbereichen unterschiedlich behandelt. Die US 2003/140709 A beschreibt beispielsweise eine Transportkette mit einem Messsystem zur Bestimmung des Kettenverschleißes, bei dem ein Sensor die vorstehenden Bolzen der Kettengelenke detektiert, um in dem zugehörigen Bereich der Kette den Grad des Verschleißes zu bestimmen. Aus der WO 2009/044117 A1 sind eine Antriebskette nach dem Oberbegriff des Anspruchs 1 und ein Kettenbolzen nach dem Oberbegriff des Anspruchs 12 bekannt, bei den ein Verschleißsensor an zwei über den Außenlaschen vorstehenden Bolzenenden angeordnet ist und ein elektrisches Signal an einen Empfänger überträgt, um den Verschleiß der Kette in situ zu überwachen. Die Druckschrift EP 2 481 690 A1 offenbart eine Gelenkkette, bei der Mitnehmerrollen auf den Kettenbolzen der Kettengelenke angeordnet sind und deren Verschleiß optisch über den Durchmesser der Mitnehmerrollen gemessen werden, um einen Vergleichswert für den Verschleiß des Kettengelenks zu erzeugen. Die CN 204 961 698 U bezieht sich auf eine Ofenkette, bei der die Rollen mit einer Verschleißschutzschicht versehen sind und die Außenlasche einen Gleichgewichtssensor aufweist, um die Einsatzzeit der Ofenkette zu erhöhen.

Trotz der unterschiedlichen Konzepte, den Verschleiß der Kettengelenke von Förderketten zu erfassen und die Lebensdauer der Antriebsketten vorherzusagen, gibt es im Stand der Technik keine zufriedenstellende Lösung zur Erfassung des Kettenverschleißes an Antriebsketten. Der vorliegenden Erfindung liegt daher die Aufgabe zugrunde, eine Antriebskette, insbesondere eine Förderkette für Industrieanlagen bereitzustellen, die eine einfache und sichere Erfassung des Kettenverschleißes ermöglicht.

Erfindungsgemäß wird eine Antriebskette gemäß Anspruch 1 bereitgestellt. Diese Aufgabe wird bei einer gattungsgemäßen Antriebskette dadurch gelöst, dass mindestens ein Kettenbolzen eine Ausnehmung aufweist, wobei der Sensor zur Erfassung des Kettenverschleißes in der Ausnehmung angeordnet ist. Das Vorsehen einer Ausnehmung im Kettenbolzen als quer zur Gelenkachse verlaufenden Sacklochbohrung und die Anordnung des Verschleißsensors in dieser Ausnehmung ermöglicht eine direkte Erfassung des Verschleißzustands der Kettenbolzen, um damit den verschleißbedingten Ausfall der Antriebskette und anderer Komponenten des Kettengelenks zu verhindern. Durch eine solche direkte Messung des Zustands des Kettengelenks am Kettenbolzen kann auch auf eine Messung der Kettenlänge und eine daraus abgeleitete Abschätzung des Kettenverschleißes oder auf den Ausbau einer Probe der Antriebskette und eine nachfolgende Untersuchung verzichtet werden. Die Messung des in einer Ausnehmung des Kettenbolzens angeordneten Sensors ermöglicht eine direkte Erfassung des Kettenverschleißes und genauere Abschätzung der zu erwartenden verbleibenden Einsatzzeit. Dadurch kann der Zustand der Antriebskette permanent überwacht werden und gerade bei Förderketten für Industrieanlagen unplanmäßigen Ausfällen und unnötigen Stillstandszeiten vorgebeugt werden. Die Erfassung des Verschleißes zwischen dem Kettenbolzen und der Gelenköffnung mit Hilfe des in der Ausnehmung angeordneten Sensors ermöglicht eine zuverlässig funktionierende Verschleißerkennung der gesamten Antriebskette. Im Gegensatz zu herkömmlichen Antriebsketten, bei denen der gelenkabhängige Kettenverschleiß nur sehr schwer festzustellen ist, da die Kettengelenke und entsprechend die Reibungsflächen innerhalb der Antriebsketten liegen, ermöglicht die erfindungsgemäße Ausgestaltung der Antriebskette eine Erhöhung der Kettenstandzeiten bei gleichzeitiger Reduzierung von unbeabsichtigten Stillstandszeiten. Gleichzeitig ermöglicht die Erfindung einer zuverlässigen Verschleißerkennung bei unter extremen Umgebungsbedingungen eingesetzten Antriebsketten den Einsatz innovativer Materialien oder Konstruktionen, die ohne eine sichere und lückenlose Überwachung nicht genutzt werden könnten.

Eine bevorzugte Ausführungsform sieht vor, dass die Ausnehmung eine mit der quer verlaufenden Sacklochbohrung verbundene, in Richtung der Gelenkachsen verlaufende Längsbohrung aufweist, wobei der Sensor in der Querbohrung angeordnet ist. Dabei steht die Querbohrung bevorzugt senkrecht zur Gelenkachse, jedoch kann die Querbohrung auch geneigt zur Senkrechten verlaufen, sofern die Funktion zur Anordnung des Verschleißsensors in der Querbohrung nicht deutlich negativ beeinflusst wird. Die Querbohrung endet mit einer sicheren Anordnung des Sensors zur Erfassung des Kettenverschleißes im Kettenbolzen an einer Stelle nur geringer Beeinträchtigung der als Gelenkfläche dienenden Umfangsfläche des Kettenbolzens. Darüber hinaus kann die Querbohrung in einem mechanisch geringer belasteten Bereich der Bolzenumfangsfläche ausgebildet sein, wodurch stärker belastete Bereiche der Gelenkfläche unbeeinträchtigt bleibt. Die mit der Querbohrung verbundene, in Richtung der Gelenkachse verlaufende Längsbohrung ermöglicht dabei eine Leitungsverbindung zwischen dem Verschleißsensor in der Querbohrung an der Gelenkfläche des Kettengelenks vorbei zu einer Erfassungseinheit jenseits des Kettenbolzens. Die quer zur Gelenkachse verlaufende Querbohrung ist in einer Längsrichtung parallel zur Gelenkachse in etwa in der Mitte des Kettenbolzens angeordnet, bevorzugt in einem Abstand zu einer Außenseite der Gelenköffnung der zwischen 15 % und 50 % der Länge des Kettenbolzens beträgt.

Eine weitere Ausbildung sieht vor, dass der Boden der Sacklochbohrung eine plane Kontaktfläche für die Anlage des Sensors aufweist. Die plane Kontaktfläche einer Sacklochbohrung bietet eine optimale Form für die Anordnung des Sensors. Darüber hinaus weist eine Sacklochbohrung nur eine in der Umfangsfläche des Kettenbolzens ausgebildete Öffnung aus, sodass die Gelenkfläche des Kettengelenks durch den Einsatz einer Sacklochbohrung geringer beeinflusst wird. Für einen optimalen Sitz des Sensors in der Sacklochbohrung entspricht der Durchmesser der Querbohrung in etwa dem Durchmesser des Sensors, insbesondere im Bereich des Bodens der Sacklochbohrung. Zur Begrenzung des negativen Einflusses auf das Kettengelenk beträgt der Durchmesser der Querbohrung zwischen 10 % und 25 %, bevorzugt etwa 20 % des Durchmessers des Kettenbolzens, absolut etwa zwischen 2,0 und 6,0 mm, bevorzugt zwischen 2,0 und 4,0 mm.

Eine vorteilhafte Ausgestaltung sieht vor, dass die Längsbohrung als Sacklochbohrung ausgebildet ist, wobei sich die Längsbohrung von einer Stirnseite des Kettenbolzens zwischen 20 % und 80 % der Länge des Kettenbolzens, bevorzugt zwischen 40 % und 60 % der Länge des Kettenbolzens, in den Kettenbolzen erstreckt. Dabei ist die Länge der Längsbohrung auch von der Position der Querbohrung abhängig, die sich zur Aufnahme und Führung der Anschlussleitung und zum Sensor miteinander verbunden sind. Alternativ zur Ausbildung der Längsbohrung als Sacklochbohrung kann auch eine Durchgangsbohrung vorgesehen sein, die sowohl die Positionierung des Sensors in der Querbohrung, als auch das Verlegen der Anschlussleitungen in der Längsbohrung erleichtert. Der Durchmesser der Längsbohrung kann in Abhängigkeit der benötigten Festigkeit des Kettenbolzens zwischen 15 % und 40 % des Durchmessers des Kettenbolzens tragen, absolut etwa zwischen 4,0 und 8,0 mm, bevorzugt etwa 6 mm.

Für eine ausreichende Festigkeit und Belastbarkeit der Antriebskette, insbesondere beim Einsatz als Förderkette für Industrieanlagen, kann der Durchmesser des Kettenbolzens zwischen 10 und 100 mm, bevorzugt zwischen 15 und 40 mm betragen. Förderketten für Industrieanlagen weisen bei extremen Umgebungs- und Verschleißbedingungen zum Teil große Kettenlängen, Förderhöhen und Förderleistungen auf, weshalb die Abmessungen des Kettenbolzens, aber auch der Gelenköffnungen und der Kettenglieder entsprechend groß dimensioniert sein müssen, um die teilweise sehr hohen Anforderungen an die Antriebsketten zu erfüllen, insbesondere im Bereich des Bergbaus, der Schüttgutindustrie, der Stahlindustrie oder der Zementindustrie.

Erfindungsgemäß wird es vorgesehen, dass der Kettenbolzen im Bereich der Gelenköffnung des Kettengelenks eine gehärtete Oberflächenschicht aufweist. Eine gehärtete Oberflächenschicht im Bereich des Kettengelenks verringert den Kettenverschleiß, der vordringlich durch die rotatorische Bewegung des Kettengelenks entsteht. Die mittels Einsatzhärten, Nitrierhärten oder Induktionshärten der Kettenbolzen erzeugte Oberflächenschicht reduziert den bei der Reibung im Kettengelenk entstehenden Verschleiß und erhöht damit die Betriebszeit. Die gehärtete Oberflächenschicht erstreckt sich zumindest über einen Teil der Umfangsfläche des Kettenbolzens, insbesondere zumindest über den gesamten Bereich der Gelenköffnung. Beim Einsatz- und Nitrierhärten beträgt die Schichtdicke der Oberflächenschicht zwischen 4 % und 10 % des Durchmessers des Kettenbolzens, absolut etwa zwischen 0,8 und 1,3 mm, bei üblichen Bolzendurchmessern von 15 bis 40 mm. Beim Induktionshärten beträgt die Schichtdicke der gehärteten Oberflächenschicht zwischen 10 % und 25 % des Durchmessers des Kettenbolzens, absolut etwa zwischen 3,0 und 8,0 mm, bei üblichen Bolzendurchmessern von 15 bis 40 mm. Erfindungsgemäß wird es vorgesehen, dass der Sensor zumindest teilweise in der gehärteten Oberflächenschicht angeordnet ist, wobei der Boden einer als Sacklochbohrung ausgebildeten Querbohrung in der gehärteten Oberflächenschicht angeordnet ist und der Sensor an dem Boden der Sacklochbohrung anliegt. Die Anordnung des Sensors in der gehärteten Oberflächenschicht ermöglicht eine sichere Erfassung des Kettenverschleißes, bevor nach einem Verbrauch der gehärteten Oberflächenschicht der Verschleiß des Kettenbolzens exponentiell ansteigt, genauso wie das Risiko eines Kettenrisses. Durch ein entsprechend genaues Einsetzen des Verschleißsensors in die Ebene der gehärteten Oberflächenschicht wird beabsichtigt den Zeitpunkt zu erfassen, bei dem 95 % der gehärteten Oberflächenschicht verbraucht ist und ab dem die Gefahr eines Ausfalls der Antriebskette deutlich ansteigt.

Darüber hinaus können die Kettenbolzen im Schüttgutverfahren auch durch Nitrieren, Nitrokarbonieren, Borieren, Inchromieren oder chemischem Vernickeln mit einer gehärteten Oberflächenschicht versehen werden. Mit einem auf den jeweiligen Einsatz der Antriebskette ausgelegten Härtungsverfahren kann der Kettenbolzen in seinem Kern auf eine gute Zähigkeit und im Randbereich auch eine möglichst hohe Beständigkeit gegen abrasiven und adhäsiven Verschleiß eingestellt werden, wobei bei allen Härtungsverfahren auf eine gute Haftung zwischen der gehärteten Oberflächenschicht und dem Grundwerkstoff geachtet werden muss.

Ein günstiges Ausführungsbeispiel sieht vor, dass der Sensor als ein Verschleißsensor ausgebildet ist, bevorzugt ein Kontakt-Verschleißsensor mit einer isolierten Drahtschleife, insbesondere mit zwei Drahtschleifen, die relativ zur Oberflächenschicht des Kettenbolzens an unterschiedlichen Positionen im Kontakt-Verschleißsensor, und entsprechend im Kettenbolzen, angeordnet sind. Der in der gehärteten Oberflächenschicht des Kettenbolzens angeordnete Verschleißsensor wird im Betrieb der Antriebskette gezielt abgenutzt, wobei der Abnutzungsprozess irreversibel ist. Dabei ändert sich der elektrische Widerstand entweder mit der Abnutzung des Sensors oder ab einem gewissen Abnutzungsgrad wird von dem Sensor ein Signal erzeugt. Dieses Signal kann dabei durch die Unterbrechung eines elektrischen Kontakts oder durch den Massekontakt einer vorher isolierten Drahtschleife entstehen. Beim Kontakt-Verschleißsensor mit zwei Drahtschleifen sind die Drahtschleifen nicht nur gegenüber dem Kontakt-Verschleißsensor isoliert, sondern auch vollständig gegeneinander isoliert. Weiterhin sollte der Kontakt-Verschleißsensor auch seitlich zur aufnehmenden Querbohrung isoliert sein. Zur Prüfung der Sensorpositionierung in der Querbohrung kann dann entsprechend auch eine Widerstandsmessung gegen den Boden der Querbohrung gemacht werden.

Eine weitere Modifikation sieht vor, dass eine Signaleinheit zur Erfassung und Übertragung der Messwerte des Sensors vorgesehen ist, wobei die Signaleinheit bevorzugt an einer Stirnseite des Kettenbolzens angeordnet ist und eine Anschlussleitung des Sensors sich bevorzugt durch eine Längsbohrung des Kettenbolzens zur Signaleinheit erstreckt. Eine solche Signaleinheit zur Erfassung des Kettenverschleißes bzw. des Verschleißes des Kettenbolzens kann insbesondere am Außenkettenglied der Antriebskette angeordnet sein und an der Außenlasche selbst und/oder am Kettenbolzen, bzw. in der Längsbohrung, befestigt und entsprechend gesichert werden. Dadurch kann die Signaleinheit zusammen mit den Kettengliedern der Antriebskette in den entsprechenden Fördertrieben mitumlaufen. Dadurch wird eine unregelmäßige und fehlerbehaftete Übertragung von Signalen des Sensors an die Signaleinheit vermieden. Weiter kann so zusammen mit der Antriebskette ein relativ widerstandsfähiges System entstehen, das auch gegen aggressive Umgebungsbedingungen, hohe Temperaturen und extreme Schmutzbelastung geschützt ist (z.B. IP68).

Um einen möglichst autarken Betrieb der Signaleinheit und des Sensors zu ermöglichen, kann zur Energieversorgung ein Nanogenerator vorgesehen sein. Alternativ wäre auch ein Batteriebetrieb der Signaleinheit denkbar, jedoch vermeidet ein solcher Nanogenerator einen bei längeren Betriebszeiten notwendigen Batteriewechsel zur Funktionssicherung sowie andere Risiken eines Versagens der Batterie. Ein solcher Nanogenerator wird üblicherweise in energieautarken Systemen genutzt, um kleine Mengen an elektrischer Energie aus Quellen wie der Umgebungstemperatur, Vibration, Druck, Bewegung, Strömung oder Strahlung zu gewinnen. Derartige energieautarke Systeme vermeiden bei drahtlosen Technologien Einschränkungen durch eine kabelgebundene Stromversorgung oder Batterien und ermöglichen so Lebens- und Nutzungszeiten der Signaleinheit und des angeschlossenen Sensors von vielen Jahren. Zweckmäßigerweise nutzt der Nanogenerator bei einer erfindungsgemäßen Antriebskette das rotatorische und translatorische Bewegungsverhalten der Kette. Entsprechend erfolgt bei dem hier in der Signaleinheit eingesetzten Nanogenerator die Energieumwandlung bevorzugt durch den piezoelektrischen Effekt. Alternativ können auch elektromagnetische, mechanische, induktive, elektrostatische Effekte oder Kombinationen dieser Effekte genutzt werden.

Zur sicheren Messwerterfassung und Steuerung der Signaleinheit kann die Signaleinheit einen Mikroprozessor aufweisen, bevorzugt einen Low Power-Prozessor. Darüber hinaus kann die Signaleinheit eine Energiemanagementeinheit und eine Sendeeinheit aufweisen, die optional durch den Mikroprozessor gesteuert sein können. Eine derartige Energiemanagementeinheit, bevorzugt mit einem Energiepuffer und/oder -speicher, verbessert die autarke Betriebssicherheit der Signaleinheit. Die Sendeeinheit ermöglicht eine gezielte, drahtlose Übertragung der Sensorsignale, wobei ein entsprechend ausgebildeter Funktransceiver als Sende- und Empfangseinheit eingesetzt sein kann, der bevorzugt in einem Frequenzbereich von etwa 2,4 GHz sendet. Dies ermöglicht zwischen der Sendeeinheit und einem Empfänger eine drahtlose Halbduplex-Datenkommunikation über ausreichend große Entfernungen, auch bei einem Einsatz in großen Industrieanlagen.

In einer alternativen Ausgestaltung kann die Signaleinheit eine induktive Transpondereinheit aufweisen. Bei der induktiven Übertragung mit Hilfe der elektromagnetischen Induktion zwischen einer induktiven Transpondereinheit zu einer entsprechenden Empfangseinheit, können in beide Richtungen Nachrichtensignale sowie die von der induktiven Transpondereinheit benötigte Energie gemeinsam und kontaktlos übertragen werden. Auch hier ist die Verbindung zwischen der Sendeeinheit und der Signaleinheit kontaktlos, so dass kein Verschleiß durch Reibung oder eine Beeinträchtigung der Funktion durch Produktion auftreten kann. Der induktive Transponder kann in entsprechenden Materialien hermetisch eingeschlossen werden, um optimal gegen eine aggressive Umgebung geschützt zu sein.

Eine typische Ausführungsform der Antriebskette sieht vor, dass sich einander abwechselnde, über das Kettengelenk miteinander verbundene Innenkettenglieder und Außenkettenglieder vorgesehen sind, wobei das Innenkettenglied mindestens eine Innenlasche, und bevorzugt eine sich durch die mindestens eine Innenlasche hindurch erstreckende Gelenkhülse zur Ausbildung der Gelenköffnung aufweist, und wobei das Außenkettenglied mindestens zwei im Abstand zueinander angeordnete Außenlaschen aufweist, die mittels zweier Kettenbolzen miteinander verbunden sind. Eine solche Gelenkkette ist gerade im Bereich von Industrieanlagen die übliche Antriebskette und kann optional als Rollenkette mit einer Laufrolle auf den Gelenkhülsen ausgebildet sein. Alternativ dazu sind auch Antriebsketten in Form von Gabelketten bekannt. Typischerweise umfassen die Innenkettenglieder zwei im Abstand zueinander angeordnete Innenlaschen, die mittels zweier Gelenkhülsen durch Einpressen, Löten oder Kleben miteinander verbunden sind. Passend dazu sind die beiden Außenlaschen des Außenkettenglieds in einem parallelen Abstand zueinander angeordnet.

Erfindungsgemäß wird auch ein Kettenbolzen gemäß Anspruch 12 bereitgestellt, wobei der Kettenbolzen eine quer zur Gelenkachse des Kettengelenks verlaufende Querbohrung und eine in Richtung der Gelenkachse verlaufende Längsbohrung aufweist. Hierbei ist die Querbohrung als Sacklochbohrung ausgebildet und ein Sensor zur Erfassung eines Kettenverschleißes anordbar. Ein derartiger Kettenbolzen ermöglicht die Überwachung des Verschleißes der Umfangsfläche, um ein Versagen des zugehörigen Kettengelenks, bzw. der Antriebskette, zu vermeiden und einen rechtzeitigen Austausch nach Erreichen der Lebensdauer der Antriebskette zu ermöglichen.

Erfindungsgemäß wird auch ein Verfahren gemäß Anspruch 13 bereitgestellt, insbesondere für eine Förderkette für Industrieanlagen, wobei ein in einer Querbohrung eines Kettenbolzens der Antriebskette angeordneter Sensor im Betrieb einem Verschleiß des Kettengelenks ausgesetzt ist, insbesondere einem maximalen Verschleiß des Kettenbolzens, und beim Erreichen einer vorbestimmten Verschleißgrenze, insbesondere einer Verschleißschichtdicke, die kleiner ist als die Dicke einer gehärteten Oberflächenschicht des Kettenbolzens, ein Verschleißsignal erzeugt. Als Verschleiß ist die mechanische Abnutzung des Kettengelenks mit Abrieb der Gelenkflächen durch die rotatorische Bewegung der Kettengelenke gemeint, wobei der Sensor, insbesondere ein Verschleißschutzsensor, innerhalb der gehärteten Oberflächenschicht angeordnet ist. Das vom Sensor erzeugte Verschleißsignal ist dabei, abhängig vom eingesetzten Sensor, insbesondere eine Widerstandsänderung oder ein Massekontakt. Mit dem erfindungsgemäßen Verfahren kann zwar auch die Betriebszeit der Antriebskette im Rahmen der möglichen Lebensdauer verlängert werden, was insbesondere bei langen Förderketten eine Kosteneinsparung ermöglicht, jedoch ist mit diesem Verfahren zur Erfassung des Kettenverschleißes einer Antriebskette der tatsächliche Verschleiß ermittelbar, wodurch ein Reißen der Antriebskette im Rahmen der Lebensdauer vermieden werden kann und ein Stillstand der Anlage über mehrere Wochen durch einen unplanmäßigen Ausfall der Antriebskette verhindert werden kann. Das Verfahren ermöglicht eine vorbeugende Wartung und einen berechenbaren Austausch der Antriebskette am Ende der Lebensdauer und bietet dadurch eine zusätzliche Sicherheit gegen einen ungeplanten Stillstand der zugehörigen Produktionsanlagen.

Im Folgenden wird eine Ausführungsform der vorliegenden Erfindung anhand von Zeichnungen näher erläutert. Es zeigen:
- Fig. 1: eine Draufsicht auf eine erfindungsgemäße Antriebskette mit einem bereichsweisen Schnitt durch die Kettenglieder,
- Fig. 2: einen Längsschnitt durch ein Kettengelenk der Antriebskette aus Fig. 1 entlang der Linie II-II,
- Fig. 3: einen Schnitt durch einen Kettenbolzen des Kettengelenks aus Fig. 2 entlang der Linie III-III,
- Fig. 4: eine Konstruktionsansicht des Verschleiß-Sensors aus Fig. 3, und
- Fig. 5: ein Blockdiagramm zur Erfassung eines Kettenverschleißes in einer Antriebskette.

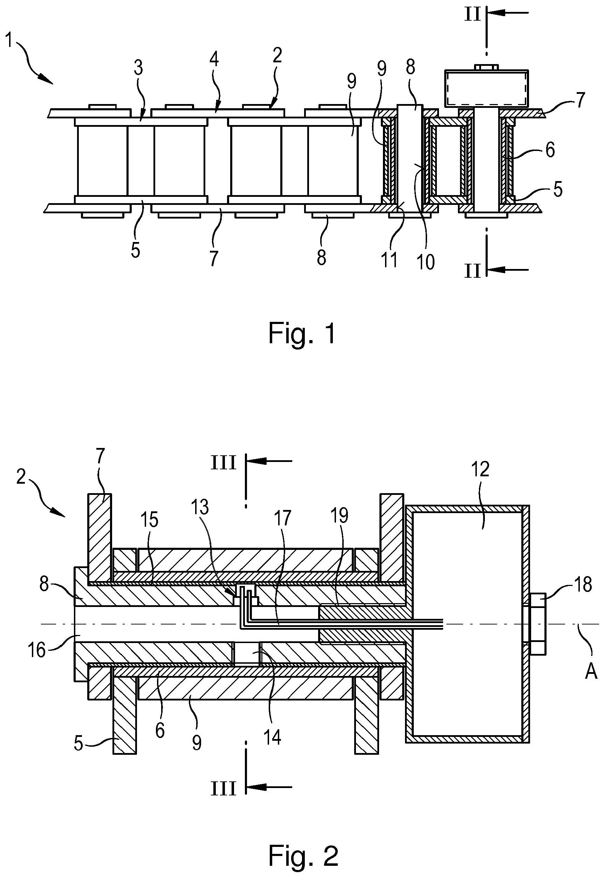

Die in Fig. 1 dargestellte Antriebskette 1 ist als Rollenkette ausgeführt, mit jeweils über ein Kettengelenk 2 verbundenen Innenkettenglieder 3 und Außenkettenglieder 4. Ein Innenkettenglied 3 besteht jeweils aus zwei parallel verlaufenden Innenlaschen 5 mit zwei Laschenöffnungen 11 und zwei die Innenlaschen 5 miteinander verbindenden Gelenkhülsen 6, wobei die Gelenkhülsen 6 senkrecht zu den Innenlaschen 5 stehen und die Gelenkhülsen 6 fest in den Laschenöffnungen 11 mit den Innenlaschen 5 verbunden sind, insbesondere durch Pressen. Die Außenkettenglieder 4 bestehen aus zwei parallel verlaufenden Außenlaschen 7, die mit zwei Kettenbolzen 8 miteinander verbunden sind, wobei die Kettenbolzen 8 drehbar in den Gelenköffnungen 10 der Gelenkhülsen 6 gelagert sind. Die Außenkettenglieder 4 sind über den Kettenbolzen 8 beweglich auf einem Innenkettenglied 3 befestigt und verbinden durch die Außenlaschen 7 das Innenkettenglied 3 mit einem nachfolgenden Innenkettenglied 3, wobei die Außenlaschen 7 parallel zu den Innenlaschen 5 verlaufen. Die drehbar in den Gelenkhülsen 6 der Innenkettenglieder 3 gelagerten Kettenbolzen 8 des Außenkettenglieds 4 bewegt jeweils das Kettengelenk 2 der Antriebskette 1 aus. Die Achsen der ineinander verlaufenden Kettenbolzen 8 und Gelenkhülsen 6 fluchten zueinander. Außen über den Gelenkhülsen 6 ist koaxial eine Laufrolle 9 angeordnet, die die Gelenkhülse 6 radial umschließt und frei drehbar auf dieser umläuft. An dem in Fig. 1 rechts dargestellten Kettengelenk 2 ist auf der Außenseite der Außenlaschen 7 eine Signaleinheit 12 zur Erfassung und Übertragung des Kettenverschleißes angeordnet. Dieses Kettengelenk 2 ist im Detail in der Schnittansicht in Fig. 2 dargestellt.

Diese Schnittansicht entlang der Linie II-II aus Fig. 1 zeigt den Kettenbolzen 8 mit einem Verschleißsensor 13, der in einer Querbohrung 14 im Kettenbolzen 8 angeordnet ist. Dabei sitzt der Sensor 13 am Boden der als Sacklochbohrung ausgebildeten Querbohrung 14 im Bereich der gehärteten Oberflächenschicht 15 des Kettenbolzens 8. Die Querbohrung 14 erstreckt sich dabei im Wesentlichen senkrecht zur Bolzenachse A des Kettenbolzens 8. In Richtung der Bolzenachse A erstreckt sich koaxial eine Längsbohrung 16, die sich hiervon einem Ende des Kettenbolzens 8 zum anderen Ende, an dem die Signaleinheit 12 angeordnet ist, erstreckt. In der Längsbohrung 16 erstrecken sich die Anschlussleitungen 17 des Sensors 13 bis zur Signaleinheit 12. Die Signaleinheit 12 ist über einen Befestigungsbolzen 18 in dem mit einem Innengewinde 19 versehenen Ende des Kettenbolzens 8 befestigt, wobei sich die Anschlussleitung durch den hohl ausgebildeten Befestigungsbolzen 18 in die Signaleinheit 12 hinein erstrecken.

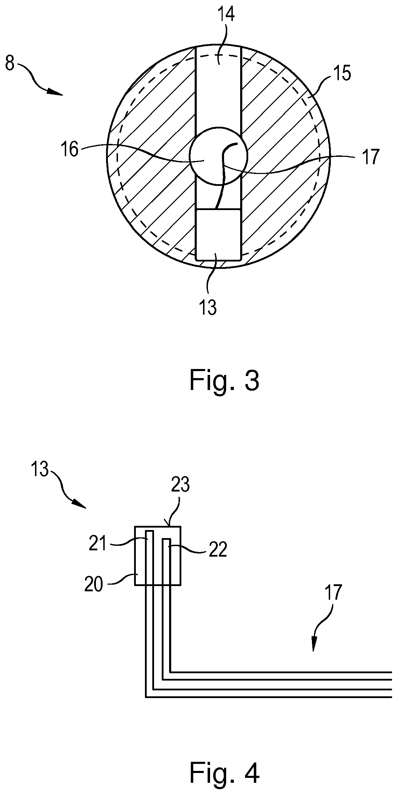

In Fig. 3 ist ein Schnitt durch den Kettenbolzen 8 entlang der Linie III-III in Fig. 2 dargestellt. In dieser Schnittansicht ist deutlich zu erkennen, dass die Querbohrung 14 im Wesentlichen mittig durch den Kettenbolzen 8 erstreckt, und dass sich die Längsbohrung 16 und die Querbohrung 14 im Bereich der Bolzenachse A schneiden. Der Boden der als Sacklochbohrung ausgebildeten Querbohrung 14 liegt im Bereich der gehärteten Oberflächenschicht 15 des Kettenbolzens 8. Der Sensor 13 liegt direkt an dem Boden der Querbohrung 14 an, wobei der Sensor 13 sich im Randbereich bis zur Hälfte in die gehärtete Oberflächenschicht 15 hinein erstreckt. Die Anschlussleitungen 17 laufen zunächst durch die Querbohrung 14 und dann durch die Längsbohrung 16 bis hin zur Signaleinheit 12 (hier nicht gezeigt). Alternativ oder zusätzlich kann die Signaleinheit 12 auch an der Außenlasche 7 des Außenkettenglieds 4 befestigt werden.

Für einen sicheren Sitz des Verschleißsensors 20 in der Querbohrung 14 und ein sicheres Anliegen des Kopfs 23 am Boden der Querbohrung 14 im Bereich der gehärteten Oberflächenschicht 15 kann der Sensor 13 in der Querbohrung 14 eingeschraubt und zusätzlich durch ein Einkleben der Schraubverbindung oder andere bekannte Sicherungsmaßnahmen dauerhaft fixiert werden. Dadurch kann der Sensor 13 auch Schwingungen und Stöße der Antriebskette 1 kompensieren, ohne sich aus seiner Position in der Querbohrung 14 zu lösen.

In Fig. 4 ist der als Verschleißsensor 20 ausgebildete Sensor 13 aus Fig. 3 in einem Konstruktionsprinzip dargestellt. Dieser Verschleißsensor 20 umfasst eine erste Drahtschleife 21 und eine zweite Drahtschleife 22, die vollständig gegeneinander und gegenüber dem Verschleißsensor 20 isoliert sind. Dabei ist die erste Drahtschleife 21 der näher an der freien Stirnseite bzw. Kopf 23 des Verschleißsensors 20 angeordnet als die zweite Drahtschleife 22. Damit ist die erste Drahtschleife 21 in der Anordnung aus Fig. 3 auch näher an dem Boden der Querbohrung 14 und auch tiefer an der gehärteten Oberflächenschicht 15 des Kettenbolzens 8 positioniert.

Über die erste Drahtschleife 21 und die zweite Drahtschleife 22 des im Bereich der gehärteten Oberflächenschicht 15 positionierten Verschleißsensors 20 kann beim Betrieb der Antriebskette 1 der Abrieb der gehärteten Oberflächenschicht 15 detektiert werden, bevor diese vollständig verschlissen ist und es anschließend zu einem schnellen Durchreiben und Bruch des Kettenbolzens 8 kommt. Durch die unterschiedlichen Positionen der ersten Drahtschleife 21 und der zweiten Drahtschleife 22 kann die Signaleinheit 12 bereits bei einer abnehmenden Dicke der gehärteten Oberflächenschicht 15 ein Warnsignal ausgeben, bevor bei einem Kontakt mit der zweiten Drahtschleife 22 ein Alarmsignal zum sofortigen Austausch der Antriebskette 1 gegeben wird. Beim Verschleiß der gehärteten Oberflächenschicht 15 wird auch der Kopf 23 des Verschleißsensors 20 abgetragen, bis es zu einem Massekontakt oder Unterbrechung der ersten Drahtschleife 21 kommt. Beim weiteren Verschleiß der gehärteten Oberflächenschicht 15 des Kettenbolzens 8 wird dann auch die zweite Drahtschleife 22 erreicht und die Signaleinheit 12 gibt ein Signal zum sofortigen Austausch der Antriebskette 1 heraus.

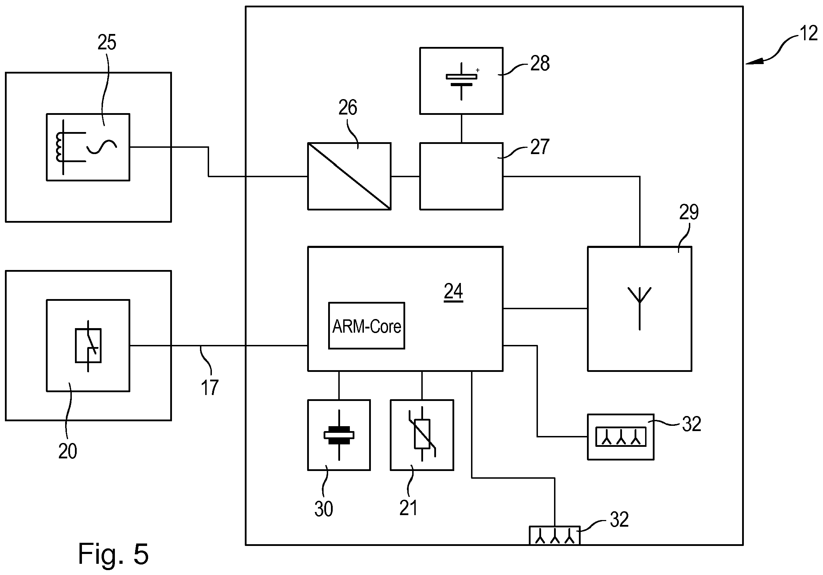

Wie in dem Blockschaltbild in Fig. 5 gut zu erkennen, ist der Prozessor 24 der Signaleinheit 12 über die Anschlussleitung 17 mit dem Verschleißsensor 20 des Kettenbolzens 8 verbunden. Wie mit dem Verschleißsensor 20 ist die Signaleinheit 12 auch über Anschlussleitungen mit einem Nanogenerator 25 verbunden, der über einen Konverter 26 und eine Energiemanagementeinheit 27 mit dem Prozessor 24 und einem Funkmodul 29 sowie optional mit einer Batterie 28 verbunden ist. Alternativ kann der Nanogenerator 25 auch innerhalb der Signaleinheit 12 angeordnet sein. Der Prozessor 24 kann optional weiter auch mit einem Beschleunigungssensor 30, einem Temperatursensor 31 sowie entsprechenden Schnittstellen 32 verbunden sein. Über dem Beschleunigungssensor 30 können die in der Signaleinheit 12 wirkenden Schwingungen und Beschleunigungen erfasst werden. Mit den Temperatursensor 31 können die in der Signaleinheit 12 auftretenden Umgebungsbedingungen ermittelt und gegebenenfalls protokolliert werden. Der Nanogenerator 25 ermöglicht, beispielsweise mittels einer Energieumwandlung durch den piezoelektrischen Effekt, die Erzeugung einer kleinen Menge an elektrischer Energie, die über den Konverter 26 auf ein höheres Spannungsniveau angehoben wird. Das Energiemanagement 27 steuert den Energieverbrauch des Prozessors 24 und des Funkmoduls 29 und stellt den Modulen die jeweils erforderliche Energie zur Verfügung. Die Übertragung der Signale des Verschleißsensors 20 sowie weiterer Messwerte erfolgt über das Funkmodul 29.

### Bezugszeichenliste

- 1: Antriebskette
- 2: Kettengelenk
- 3: Innenkettenglied
- 4: Außenkettenglied
- 5: Innenlasche
- 6: Gelenkhülsen
- 7: Außenlasche
- 8: Ketten bolzen
- 9: Laufrolle
- 10: Gelenköffnung
- 11: Hülsenöffnung
- 12: Signaleinheit
- 13: Sensor
- 15: Gehärtete Oberflächenschicht
- 16: Längsbohrung
- 17: Anschlussleitung
- 18: Befestigungsbolzen
- 19: Innengewinde
- 10: Verschleißsensor
- 21: Erste Drahtschleife
- 22: Zweite Drahtschleife
- 23: Kopf
- 24: Prozessor
- 25: Nanogenerator
- 26: Konverter
- 27: Energiemanagementeinheit
- 28: Batterie
- 29: Funkmodul
- 30: Beschleunigungssensor
- 31: Temperatursensor
- 31: Schnittstelle

- A: Bolzenachse

## Patentansprüche

1. Antriebskette (1), insbesondere eine Förderkette für Industrieanlagen, mit einer Vielzahl von Kettengliedern (3,4) die jeweils über ein Kettengelenk (2) miteinander verbunden sind, wobei sich zur Ausbildung des Kettengelenks (2) ein Kettenbolzen (8) in Richtung einer Gelenkachse (A) des Kettengelenks (2) durch eine Gelenköffnung (10) erstreckt und mindestens ein Kettenbolzen (8) eine Ausnehmung aufweist, in welcher ein Sensor (13) zur Erfassung eines Kettenverschleißes angeordnet ist, wobei die Ausnehmung als eine quer zur Gelenkachse (A) verlaufende Sacklochbohrung ausgebildet ist, **dadurch gekennzeichnet, dass** der Kettenbolzen (8) im Bereich der Gelenköffnung (10) eine gehärtete Oberflächenschicht (15) aufweist, und der Boden der quer verlaufenden Sacklochbohrung in der gehärteten Oberflächenschicht (15) angeordnet ist, wobei der Sensor (13) zumindest teilweise in der gehärteten Oberflächenschicht (15) angeordnet ist und an dem Boden der Sacklochbohrung anliegt.

2. Antriebskette (1) nach Anspruch 1,
**dadurch gekennzeichnet, dass** eine mit der Sacklochbohrung verbundene, in Richtung der Gelenkachse (A) verlaufende Längsbohrung (16) vorgesehen ist.

3. Antriebskette (1) nach Anspruch 2,
**dadurch gekennzeichnet, dass** der Boden der quer verlaufenden Sacklochbohrung eine plane Kontaktfläche für die Anlage des Sensors (13) aufweist.

4. Antriebskette (1) nach Anspruch 2 oder 3,
**dadurch gekennzeichnet, dass** die Längsbohrung (16) als Sacklochbohrung ausgebildet ist, wobei sich die Längsbohrung (16) von einer Stirnseite des Kettenbolzens (8) zwischen 20 % und 80 % der Länge des Kettenbolzens (8), bevorzugt zwischen 40 % und 60 % der Länge des Kettenbolzens (8), in den Kettenbolzen (8) erstreckt.

5. Antriebskette (1) nach einem der Ansprüche 1 bis 4,
**dadurch gekennzeichnet, dass** der Durchmesser des Kettenbolzens (8) zwischen 10 und 100 mm, bevorzugt zwischen 15 und 40 mm beträgt.

6. Antriebskette (1) nach einem der Ansprüche 1 bis 5,
**dadurch gekennzeichnet, dass** der Sensor (13) als ein Verschleißsensor (20) ausgebildet ist, bevorzugt ein Kontakt-Verschleißsensor (20) mit einer isolierten Drahtschleife (21,22), insbesondere mit zwei Drahtschleifen (21,22) die relativ zur gehärteten Oberflächenschicht (15) des Kettenbolzens (8) an unterschiedlichen Positionen im Kontakt-Verschleißsensor (20) angeordnet sind.

7. Antriebskette (1) nach einem der Ansprüche 1 bis 6,
**dadurch gekennzeichnet, dass** eine Signaleinheit (12) zur Erfassung und Übertragung der Messwerte des Sensors (13) vorgesehen ist, wobei die Signaleinheit (12) bevorzugt an einer Stirnseite des Kettenbolzens (8) angeordnet ist und eine Anschlussleitung (17) des Sensors (13) sich bevorzugt durch eine Längsbohrung (16) im Kettenbolzen (8) zur Signaleinheit (12) erstreckt.

8. Antriebskette (1) nach Anspruch 7,
**dadurch gekennzeichnet, dass** die Signaleinheit (12) einen Nanogenerator (25) zur Energieversorgung aufweist.

9. Antriebskette (1) nach Anspruch 7 oder 8,
**dadurch gekennzeichnet, dass** die Signaleinheit (12) einen Mikroprozessor (24), eine Energiemanagementeinheit (27) und ein Funkmodul (29) aufweist.

10. Antriebskette (1) nach Anspruch 7,
**dadurch gekennzeichnet, dass** die Signaleinheit (12) eine induktive Transpondereinheit aufweist.

11. Antriebskette (1) nach einem der Ansprüche 1 bis 10,
**dadurch gekennzeichnet, dass** sich einander abwechselnde, über das Kettengelenk (2) miteinander verbundene Innenkettenglieder (3) und Außenkettenglieder (4) vorgesehen sind, wobei das Innenkettenglied (3) mindestens eine Innenlasche (5) und bevorzugt zwei sich durch die mindestens eine Innenlasche (5) hindurch erstreckende Gelenkhülsen (6) zur Ausbildung der Gelenköffnung (10) aufweist, und wobei das Außenkettenglied (4) mindestens zwei im Abstand zueinander angeordnete Außenlaschen (7) aufweist, die mittels zweier Kettenbolzen miteinander verbunden sind.

12. Kettenbolzen (8) für eine Antriebskette (1) nach einem der Ansprüche 1 bis 11, wobei der Kettenbolzen (8) eine quer zur Gelenkachse (A) eines den Kettenbolzen (2) aufnehmenden Kettengelenks (2) verlaufende Sacklochbohrung, eine mit der Sacklochbohrung verbundene, in Richtung der Gelenkachse (A) verlaufende Längsbohrung (16) und einen Sensor (13) zur Erfassung eines Kettenverschleißes aufweist, **dadurch gekennzeichnet, dass** und der Kettenbolzen (8) im Bereich der Gelenköffnung (10) eine gehärtete Oberflächenschicht (15) aufweist, und der Boden der quer verlaufenden Sacklochbohrung in der gehärteten Oberflächenschicht angeordnet ist, wobei der Sensor (13) zumindest teilweise in der gehärteten Oberflächenschicht (15) angeordnet ist und an dem Boden der Sacklochbohrung anliegt.

13. Verfahren zur Erfassung eines Kettenverschleißes einer Antriebskette (1) nach einem der Ansprüche 1 bis 11, insbesondere einer Förderkette für Industrieanlagen, wobei der Sensor (13), der in der quer verlaufenden Sacklochbohrung des Kettenbolzens (8) der Antriebskette (1) angeordnet ist, im Betrieb einem Verschleiß des Kettengelenks (2) ausgesetzt ist, insbesondere einem maximalen Verschleiß des Kettenbolzens (8), und bei einem Erreichen einer vorbestimmten Verschleißschichtdicke die kleiner ist als die Dicke einer gehärteten Oberflächenschicht (15) des Kettenbolzens (8) ein Verschleißsignal erzeugt.

## Claims

1. Drive chain (1), in particular a conveyor chain for industrial plants, having a plurality of chain links (3, 4) which are each connected to one another via a chain joint (2), wherein, to form the chain joint (2), a chain pin (8) extends in the direction of a joint axis (A) of the chain joint (2) through a joint opening (10), and wherein at least one chain pin (8) has a recess in which a sensor (13) for detecting chain wear is arranged, the recess being in the form of a blind hole extending transversely to the joint axis (A),
**characterized in that** the chain pin (8) has a hardened surface layer (15) in the region of the joint opening (10), and the bottom of the transversely extending blind hole bore is arranged in the hardened surface layer (15), the sensor (13) being arranged at least partially in the hardened surface layer (15) and abutting against the bottom of the blind hole bore.

2. Drive chain (1) according to claim 1,
**characterized in that** a longitudinal bore (16) is provided which is connected to the blind bore and extends in the direction of the joint axis (A).

3. Drive chain (1) according to claim 2,
**characterized in that** the bottom of the transversely extending blind hole has a plane contact surface for the contact of the sensor (13).

4. Drive chain (1) according to claim 2 or 3,
**characterized in that** the longitudinal bore (16) is designed as a blind bore, the longitudinal bore (16) extending from an end face of the chain pin (8) between 20% and 80% of the length of the chain pin (8), preferably between 40% and 60% of the length of the chain pin (8), into the chain pin (8).

5. Drive chain (1) according to any one of claims 1 to 4,
**characterized in that** the diameter of the chain pin (8) is between 10 and 100 mm, preferably between 15 and 40 mm.

6. Drive chain (1) according to one of claims 1 to 5,
**characterized in that** the sensor (13) is designed as a wear sensor (20), preferably a contact wear sensor (20) with an insulated wire loop (21, 22), in particular with two wire loops (21, 22) which are arranged at different positions in the contact wear sensor (20) relative to the hardened surface layer (15) of the chain pin (8).

7. Drive chain (1) according to one of the claims 1 to 6,
**characterized in that** a signal unit (12) is provided for detecting and transmitting the measured values of the sensor (13), the signal unit (12) preferably being arranged on an end face of the chain pin (8) and a connection line (17) of the sensor (13) preferably extending through a longitudinal bore (16) in the chain pin (8) to the signal unit (12).

8. Drive chain (1) according to claim 7,
**characterized in that** the signal unit (12) has a nanogenerator (25) for power supply.

9. Drive chain (1) according to claim 7 or 8,
**characterized in that** the signal unit (12) comprises a microprocessor (24), a power management unit (27) and a radio module (29).

10. Drive chain (1) according to claim 7,
**characterized in that** the signal unit (12) comprises an inductive transponder unit.

11. Drive chain (1) according to any one of claims 1 to 10,
**characterized in that** alternating inner chain links (3) and outer chain links (4) connected to one another via the chain joint (2) are provided, the inner chain link (3) having at least one inner link plate (5) and preferably two joint sleeves (6) extending through the at least one inner link plate (5) to form the joint opening (10), and the outer chain link (4) having at least two outer link plates (7) arranged at a distance from one another and connected to one another by means of two chain pins.

12. Chain pin (8) for a drive chain (1) according to one of claims 1 to 11, wherein the chain pin (8) has a blind hole bore extending transversely to the joint axis (A) of a chain joint (2) receiving the chain pin (2), a longitudinal bore (16) connected to the blind hole bore and extending in the direction of the joint axis (A), and a sensor (13) for detecting a chain wear,
**characterized in that** the chain pin (8) has a hardened surface layer (15) in the region of the joint opening (10), and the bottom of the transversely extending blind hole bore is arranged in the hardened surface layer, the sensor (13) being arranged at least partially in the hardened surface layer (15) and abutting against the bottom of the blind hole bore.

13. Method for detecting a chain wear of a drive chain (1) according to one of the claims 1 to 11, in particular of a conveyor chain for industrial plants, wherein the sensor (13), which is arranged in the transversely extending blind hole bore of the chain pin (8) of the drive chain (1), is subjected to wear of the chain joint (2) during operation, in particular maximum wear of the chain pin (8), and generates a wear signal when a predetermined wear layer thickness is reached which is smaller than the thickness of a hardened surface layer (15) of the chain pin (8).

## Revendications

1. Chaîne d'entraînement (1), en particulier chaîne transporteuse pour installations industrielles, présentant une pluralité de maillons de chaîne (3, 4) qui sont chacun reliés l'un à l'autre par l'intermédiaire d'une articulation de chaîne (2) afin de former l'articulation de chaîne (2), un tourillon de chaîne (8) s'étendant dans le sens d'un axe d'articulation (A) de l'articulation de chaîne (2) à travers une ouverture d'articulation (10) et au moins un tourillon de chaîne (8) présentant un alésage de trou borgne, dans lequel un capteur (13) de détection d'une usure de la chaîne est disposé, l' alésage de trou borgne étant disposé au moins partiellement dans la couche de surface durcie (15) et reposant contre le fond de l'alésage de trou borgne.

2. Chaîne d'entraînement (1) selon la revendication 1,
**caractérisée en ce que,** un alésage allongé (16) qui est relié à l'alésage de trou borgne et qui s'étend dans le sens de l'axe d'articulation (A) est fourni.

3. Chaîne d'entraînement (1) selon la revendication 2,
**caractérisée en ce que,** le fond de l'alésage de trou borgne allongé présente une surface de contact plane pour le contact du capteur (13).

4. Chaîne d'entraînement (1) selon la revendication 2 ou 3,
**caractérisée en ce que,** l'alésage allongé (16) est conçu comme alésage de trou borgne, l'alésage allongé (16) s'étendant depuis une face d'extrémité du tourillon de chaîne (8) entre 20 % et 80 % de la longueur du tourillon de chaîne (8), préférablement entre 40 % et 60 % de la longueur du tourillon de chaîne (8), dans le tourillon de chaîne (8).

5. Chaîne d'entraînement (1) selon l'une des revendications 1 à 4,
**caractérisée en ce que,** le diamètre du tourillon de chaîne (8) est compris entre 10 et 100 mm, préférablement entre 15 et 40 mm.

6. Chaîne d'entraînement (1) selon l'une des revendications 1 à 5,
**caractérisée en ce que,** le capteur (13) est conçu comme capteur d'usure (20), préférablement capteur d'usure (20) par contact présentant une boucle de fil (21, 22) isolée, en particulier ayant deux boucles de fil (21, 22) qui sont disposées à des positions différentes dans le capteur d'usure (20) par contact par rapport à la couche de surface durcie (15) du tourillon de chaîne (8).

7. Chaîne d'entraînement (1) selon l'une des revendications 1 à 6,
**caractérisée en ce que,** une unité signal (12) est prévue pour la détection et la transmission des valeurs mesurées du capteur (13), l'unité signal (12) étant préférablement disposée sur une face d'extrémité du tourillon de chaîne (8) et une ligne de liaison (17) du capteur (13) s'étend préférablement à travers un alésage allongé (16) dans le tourillon de chaîne (8) vers l'unité signal (12) .

8. Chaîne d'entraînement (1) selon la revendication 7,
**caractérisée en ce que,** l'unité signal (12) présente un nanogénérateur (25) pour l'alimentation d'énergie.

9. Chaîne d'entraînement (1) selon la revendication 7 ou 8,
**caractérisée en ce que,** l'unité signal (12) présente un microprocesseur (24), une unité de gestion d'énergie (27) et un module radio (29).

10. Chaîne d'entraînement (1) selon la revendication 7,
**caractérisée en ce que,** l'unité signal (12) présente une unité de transpondeur inductif.

11. Chaîne d'entraînement (1) selon l'une des revendications 1 à 10,
**caractérisée en ce que,** des maillons de chaîne internes (3) et des maillons de chaîne externes (4) alternés reliés l'un à l'autre par l'intermédiaire de l'articulation de chaîne (2) sont prévus, le maillon de chaîne interne (3) ayant au moins une éclisse interne (5) et préférablement deux manchons d'articulation (6) s'étendant à travers la au moins une éclisse interne (5) pour former l'ouverture d'articulation (10), et le maillon de chaîne externe (4) ayant au moins deux plaques externes (7) qui sont disposées à une certaine distance l'une de l'autre et qui sont reliées l'une à l'autre à l'aide de deux tourillons de chaîne.

12. Tourillon de chaîne (8) pour chaîne d'entraînement (1) selon l'une des revendications 1 à 11, le tourillon de chaîne (8) présentant un alésage de trou borgne s'étendant transversalement vers l'axe d'articulation (A) d'une articulation de chaîne (2) recevant le tourillon de chaîne (2), un alésage allongé (16) relié à l'alésage de trou borgne et s'étendant dans le sens de l'axe d'articulation (A) et un capteur (13) pour détecter une usure de chaîne, **caractérisé en ce que** le tourillon de chaîne (8) présente une couche de surface durcie (15) dans la région de l'ouverture d'articulation (10), et que le fond de l'alésage de trou borgne transversal est disposé dans la couche de surface durcie, le capteur (13) étant disposé au moins partiellement dans la couche de surface durcie (15) et reposant contre le fond du trou borgne.

13. Procédé de détection de l'usure de chaîne d'une chaîne d'entraînement (1) selon l'une des revendications 1 à 11, en particulier d'une chaîne transporteuse pour installations industrielles, le capteur (13), qui est disposé dans le trou borgne transversal du tourillon de chaîne (8) de la chaîne d'entraînement (1), est exposé durant le fonctionnement à l'usure de l'articulation de chaîne (2), en particulier une usure maximale du tourillon de chaîne (8), et lorsqu'une épaisseur de couche d'usure prédéterminée est atteinte, qui est inférieure à l'épaisseur d'une couche de surface durcie (15) du tourillon de chaîne (8), un signal d'usure est généré.
